# EUROPÄISCHE PATENTSCHRIFT

(11) **EP 2 094 371 B1**
(45) Veröffentlichungstag und Bekanntmachung des Hinweises auf die Patenterteilung: **17.07.2013**
(21) Anmeldenummer: 07819476.8
(22) Anmeldetag: 31.10.2007
(51) Int. Cl.: C01B 3/38, C01B 3/48, C01B 3/52, C10K 1/16, C10K 3/04, E21B 43/16

(54) **VERFAHREN ZUR GEWINNUNG VON KOHLENDIOXID**
PROCESS FOR OBTAINING CARBON DIOXIDE
PROCÉDÉ DE RÉCUPÉRATION DE DIOXYDE DE CARBONE

(30) Priorität: 18.11.2006 DE 102006054472
(43) Veröffentlichungstag der Anmeldung: 02.09.2009
(73) Patentinhaber: Lurgi GmbH, 60295 Frankfurt am Main (DE)
(72) Erfinder: KOSS, Ulrich, CH-8702 Zollikon (CH)
(86) Internationale Anmeldenummer: PCT/EP2007/009442
(87) Internationale Veröffentlichungsnummer: WO 2008/058636

(56) Entgegenhaltungen:
- EP-A- 1 337 466
- DE-A1- 3 132 755
- US-A- 4 609 043
- US-A- 4 863 707
- US-A1- 2003 181 314
- US-B1- 6 899 859

## Beschreibung

Die Erfindung betrifft ein Verfahren zur Gewinnung von CO₂ aus entschwefeltem und von C₂₊-Komponenten befreitem Erdgas oder Erdölbegleitgas, das, auf eine Temperatur von 45 bis 75° C vorgewärmt, in einer ersten Reaktionsstufe unter Zusatz von wenigstens [trocken gerechnet] 75 Vol. % O₂ enthaltendem Gas bei einer Temperatur von 900 bis 1200° C und einem Druck von 40 bis 100 bar(a) durch partielle Oxidation über einem Festbett aus einem Spalt-Katalysator zu einem Roh-Synthesegas, enthaltend als Hauptkomponenten [trocken gerechnet] 55 bis 75 Vol. % H₂, 15 bis 30 Vol. % CO und 5 bis 30 Vol. % CO₂ mit einem Volumenverhältnis von H₂ : CO von 1,6 bis 4, autotherm reformiert wird, in einer zweiten Reaktionsstufe das in dem eine Temperatur von 75 bis 110° C und einen Druck von 50 bis 75 bar(a) aufweisenden Roh-Synthesegas enthaltene CO über wenigstens einem Festbett-Katalysator zu H₂ und CO₂ konvertiert wird, aus dem wenigstens [trocken gerechnet] 55 Vol. % H₂ enthaltenden Synthesegas in mindestens einer Waschstufe CO₂ bei einem Druck von 15 bis 100 bar(a) mit eine Temperatur von +10 bis - 80° C aufweisendem Methanol ausgewaschen und absorbiertes CO₂ durch Entspannen des kalten Methanols bis nahezu auf atmosphärischen Druck rückgewonnen wird.

Aus der EP-B -1337 466 ist ein derartiges Verfahren als vorstufe zum katalytischen Erzeugen von NH₃ aus einem N₂ - H₂ -Gemisch bekannt. Dabei wird Erdgas zusammen mit einem überwiegend aus O₂, vorzugsweise mindestens 70 Vol. %, bestehenden Gasstrom autotherm bei einer Temperatur von 900 bis 1200° C und einem Druck von 40 bis 100 bar(a) in Gegenwart eines Spaltkatalysators zu rohem Synthesegas, enthaltend [trocken gerechnet] 55 bis 75 Vol. %, 15 bis 30 Vol. % CO und 5 bis 30 Vol. % CO₂ bei einem Volumenverhältnis von H₂ : CO von 1,6 bis 4, reformiert. Durch katalytische Konvertierung wird der CO-Gehalt des aus dem autothermen Reformer abgezogenen und gekühlten rohen Synthesegases in H₂ umgewandelt, so dass das gebildete Synthesegas [trocken gerechnet] mindestens 50 Vol. % H₂ und höchstens 8 Vol. % enthält. In einer mehrstufigen Gaswäsche werden aus dem Synthesegas CO₂, CO und CH₄ entfernt, wobei in mindestens einer der Stufen flüssiger N₂ zur Erzeugung eines N₂-H₂-Gemisch für die katalytische Herstellung von Ammoniak in einer Ammoniak-Synthese zugesetzt wird. Bei der Gaswäsche wird CO₂ mit eine Temperatur von - 58° C besitzendem Methanol entfernt und in Verbindung mit der Herstellung von NH₃ zur Erzeugung von Harnstoff eingesetzt. In der N₂-Wäsche wird das Synthesegas auf eine Temperatur von - 185° C gekühlt, so dass zunächst CH₄ und anschließend CO kondensieren. CH₄ wird als Heizgas in den autothermen Reformer, CO zur Konvertierung rückgeführt.

DE 31 32 755 A1 beschreibt die Nutzung von überkritischem Kohlendioxid zur weiteren Erdölgewinnung von bereits durch Primärförderung ausgebeuteten Lagerstätten.

US 6 899 859 B1 lehrt die Herstellung eines kohlendioxidhaltigen Gasstromes durch einstufiges Reformieren im überkritischem Zustand, die Auftrennung des Reformierungsproduktes in kohlendioxid reiche bzw. wasserstoffreiche Gasströme sowie die Verwendung des kohlendioxidreichen Gasstroms zur Injektion in marine Formationen oder Öllagerstätten.

Es ist die Aufgabe der vorliegenden Erfindung, das eingangs beschriebene Verfahren für weitere Verwendungszwecke nutzbar zu machen und eine alternative prozessinterne Verwertung eizengter Gaskomponenten aufzuzeigen.

Die Lösung dieser Aufgabe erfolgt gemäß Anspruch 1.

Im Rahmen der weiteren Ausgestaltung des Verfahrens besteht die Möglichkeit den gewonnenen H₂ ganz oder teilweise als Brennstoff einer Gasturbine oder einer andern Einrichtung zur Erzeugung von elektrischer Energie, beispielsweise einer Brennstoffzelle zuzuführen, wobei nach einem weiteren Erfindungsmerkmal der H₂ mit bis zu 70 Vol. % N₂ verdünnt werden kann.

Nach einem besonderen Erfindungsmerkmal wird ein Teil der von der Gasturbine oder einer andern Einrichtung zur Gewinnung elektrischer Energie erzeugten mechanischen Energie zum Antrieb des Verdichters der Luftzerlegungsanlage und/oder der Kompressionsanlage für das CO₂ genutzt; der verbleibende Teil steht als nutzbare Energie zur Verfügung.

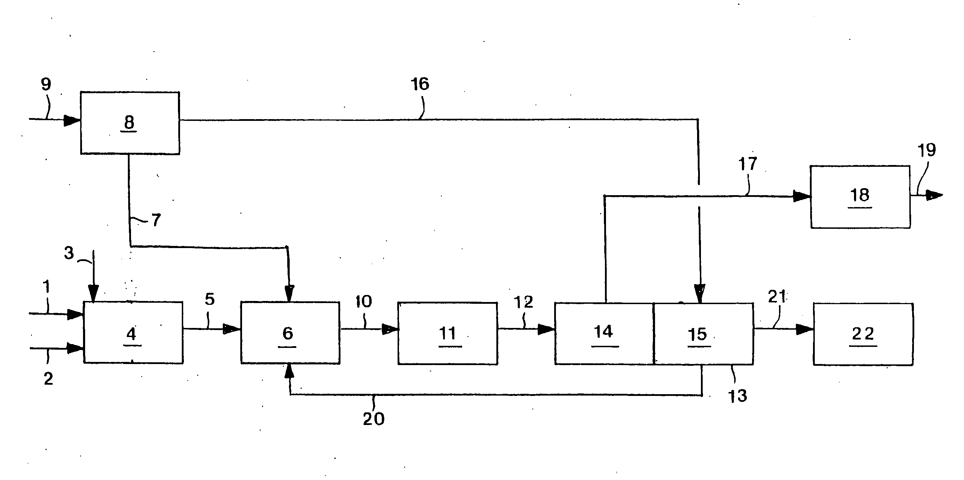

Die Erfindung wird nachfolgend an Hand eines Ausführungsbeispiels in Verbindung mit einem in der Zeichnung dargestellten Grundfließschemas näher erläutert.

Über Leitung (1) wird Erdgas mit einem Druck von 45 bis 65 bar(a) und einer Temperatur von 15 bis 35° C, über Leitung (2) Wasserdampf und über Leitung (3) CH₄ der Vorbehandlungsanlage (4) zugeführt, in der das Erdgas an einer Schüttung aus Co-Mo-Katalysator mit einer nachgeordneten Schüttung aus ZnO von Schwefelverbindungen und C₂₊-Komponenten befreit und auf eine Temperatur von 55 bis 75° C vorgewärmt wird. Das über Leitung (5) aus der Vorbehandlungsanlage (4) abgeführte Gas wird einem autothermen Reformer (6) gleichzeitig mit über Leitung (7) zugeführtem, in einer Luftzerlegungsanlage (8), in die über Leitung (9) Luft eingeleitet wird, erzeugtem O₂-reichen Gas mit einem O₂-Gehalt von [trocken gerechnet] 92 Vol. % aufgegeben. In dem autothermen Reformer (6) befindet sich eine Schüttung aus handelsüblichem NiO-Katalysator, an dem bei einer Temperatur von 900 bis 1200° C und einem Druck von 40 bis 100 bar(a), vorzugsweise 40 bis 80 bar(a) das Erdgas durch partielle Oxidation mit O₂ zu CO, H₂ und CO₂ enthaltendem Roh-Synthesegas reformiert wird. Das über Leitung (10) aus dem autothermen Reformer (6) abgezogene Roh-Synthesegas enthält [trocken gerechnet] 55 bis 75 Vol. % H₂, 15 bis 30 Vol. % CO und 5 bis 30 Vol. % CO₂ bei einem Volumenverhältnis H₂ : CO von 1,6 bis 4. Das in einem nicht dargestellten Wärmeaustauscher auf eine Temperatur von 25 bis 45° C zwischengekühlte Roh-Synthesegas wird in einem zweistufigen mit einer Schüttung aus handelsüblichem Fe-Cr-Katalysator gefüllten Konverter (11) geleitet, in dem das in dem Roh-Synthesegasstrom noch enthaltene CO zu CO₂ und H₂ konvertiert wird, wobei das Volumenverhältnis von H₂ : CO₂ [trocken gerechnet] 2,5 bis 3 beträgt. Der durch Konversion entstandene, über Leitung (12) abgezogene Synthesegasstrom, der [trocken gerechnet] mindestens 65 Vol. % H₂ und höchstens 8 Vol. % CO enthält, wird nach dem Durchströmen eines nicht dargestellten Wärmetauschers in eine zweistufige physikalischen Gaswaschanlage (13) geführt. In der ersten Stufe (14) der Gaswaschanlage (13) wird CO₂ mittels eine Temperatur von - 20 bis -70° C besitzendem Methanol bei einem Druck von 40 bis 80 bar(a) absorbiert. In der zweiten Stufe (15) der Gaswaschanlage (13) werden die nach der Entfernung von CO₂ in dem Synthesegasstrom noch verbliebenen Verunreinigungen CO, CH₄ und Ar mittels in der Luftzerlegungsanlage (8) gewonnenem und über Leitung (16) der zweiten Stufe (15) aufgegebenem flüssigen Stickstoff absorbiert. Zum Entfernen von absorbiertem CO₂ aus dem Methanol und der absorbierten CO, CH₄ und Ar aus dem N₂ werden das Methanol und der N₂ auf nahezu atmosphärischen Druck entspannt. Das gewonnenen CO₂ wird über Leitung (17) einer Anlage (18) zugeführt, in der das CO₂ durch Erhöhung von Druck und Temperatur in den überkritischen Zustand versetzt und zum Lösungsmittelfluten über Leitung (19) in teilweise entölte Erdöllagerstätten injiziert wird. Der CO, CH₄ und Ar enthaltende Gasstrom wird über Leitung (20) als Heizgas in den autothermen Reformer (6) rückgeführt. Der bei der Absorption des CO₂ in der ersten Stufe (14) der Gaswaschanlage (13) gewonnene H₂ strömt als Brennstoff über Leitung (21) in die Brennkammer einer Gasturbine (22).

Die mit einer konkreten Ausführungsform des erfindungsgemäßen Verfahrens ermittelten Daten für Stoffmengen, Temperaturen, Drücke und Zusammensetzung der Gasströme sind in der nachfolgenden Tabelle mit Bezug auf das in der Zeichnung wiedergegebene Grundfließschema aufgeführt.

| | | | | | | | |
|---|---|---|---|---|---|---|---|
| Leitung Nr. | 1 | 5 | 10 | 12 | 17 | 20 | 21 |
| Menge (t/h) | 92 | 263 | 336 | 400 | 0,044 | 0,01 | 49,8 |
| Temperatur (°C) | 25 | 65 | 95 | 32 | 40 | 40 | 209 |
| Druck (bar(a)) | 55 | 61 | 60 | 57 | 110 | 58 | 30-54 |
| Zusammensetzung Vol. % [tr.gerechnet] CH₄ | 91,3 | 27,0 | 1,8 | 2,0 | - | 2,0 | 0,8 |
| C₂H₆ | 5,8 | - | - | - | - | - | - |
| CO | - | 1,6 | 10,6 | 1,1 | 0,1 | 1,1 | 1,9 |
| CO₂ | 1,9 | 0,6 | 7,1 | 16,7 | 99,6 | 16,7 | 0,5 |
| Ar | - | - | 0,3 | 0,5 | - | 0,5 | 0,9 |
| H₂ | - | 3,2 | 38,7 | 47,5 | 0,2 | 47,5 | 92,5 |
| N₂ | 1,0 | 0,3 | 0,4 | 2,3 | 0,1 | 2,3 | 4,2 |
| H₂O | - | 67,3 | 41,1 | 29,9 | - | - | - |

Für die Gaswäsche (13) wird das bekannte Rectisol^{®}-Verfahren eingesetzt, bei dem in der ersten Stufe (14) CO₂ mit eine Temperatur von - 58° C aufweisendem Methanol absorbiert wird. In der zweiten Stufe (15) der Gaswäsche (13) wird die Temperatur des Synthesegases zunächst auf einen Wert von - 185° C abgesenkt, so dass CH₄ kondensiert, abgetrennt und zusammen mit ebenfalls abgetrennten CO und Ar als Heizgas in den autothermen Reformer (3) rückgeführt wird.

Die mit der Erfindung erzielbaren Vorteile bestehen insbesondere darin, dass
- Emissionen von CO₂, insbesondere aus ökologischen Gründen, unterbleiben,
- das Verfahren zur Gewinnung von überkritischen CO₂ für zum Lösungsmittelfluten überwiegend entölter Erdöllagerstätten an erdölhöffigen Standorten unmittelbar vor Ort einsetzbar ist,
- das bei der Gewinnung von Erdöl anfallende Erdölbegleitgas an vielen erdölhöffigen Standorten unmittelbar vor Ort aufgearbeitet und die erzeugten Gaskomponenten prozessintern verwertbar sind.

## Patentansprüche

1. Verfahren zur Gewinnung von CO₂ aus entschwefeltem und von C₂₊-Komponenten befreitem Erdgas oder Erdölbegleitgas, das auf eine Temperatur von 45 bis 75° C vorgewärmt in einer ersten Reaktionsstufe unter Zusatz von wenigstens 75 Vol. % O₂ [trocken gerechnet] enthaltendem Gas bei einer Temperatur von 900 bis 1200° C und einem Druck von 40 bis 100 bar_{abs} durch partielle Oxidation über einem Festbett aus einem Spalt-Katalysator zu einem Roh-Synthesegas, enthaltend als Hauptkomponenten [trocken gerechnet] 55 bis 75 Vol. % H₂, 15 bis 30 Vol. % CO und 5 bis 30 Vol. % CO₂ [trocken gerechnet] mit einem Volumenverhältnis von H₂ : CO von 1,6 bis 4, autotherm reformiert wird, in einer zweiten Reaktionsstufe das in dem eine Temperatur von 75 bis 110° C und einen Druck von 75 bis 50 bar_{abs} aufweisenden Roh-Synthesegas enthaltene CO über wenigstens einem Festbett-Katalysator zu H₂ und CO₂ konvertiert wird, aus dem wenigstens 55 Vol. % H₂ [trocken gerechnet] enthaltenden Synthesegas in einer ersten Waschstufe CO₂ bei einem Druck von 15 bis 100 bar_{abs} mit eine Temperatur von +10 bis -80° C aufweisendem Methanol ausgewaschen und absorbiertes CO₂ durch Entspannen des kalten Methanols bis nahezu auf atmosphärischen Druck rückgewonnen wird,
wobei das rückgewonnene CO₂ in den überkritischen Zustand überführt wird, und das in den überkritischen Zustand überführte CO₂ zum Lösungsmittelfluten teilweise entölter Erdöllagerstätten, zur Einlagerung in Porenspeichem, Kavernenspeichern, ausgeförderten Erdgaslagerstätten oder salinen Aquiferen oder für die Oxosynthese verwendet wird und wobei die nach der CO₂-Absorption verbliebenen, CO, CH₄ und Ar umfassenden Verunreinigungen mittels des in einer Luftzerlegungsanlage erzeugten flüssigen Stickstoffs in einer zweiten Waschstufe absorbiert und nach Entspannung als Heizgas in die erste Reaktionsstufe zurückgeführt werden.

2. Verfahren nach Anspruch 1, **dadurch gekennzeichnet, dass** der gewonnene Wasserstoff als Brennstoff einer Gasturbine und/oder einer andern Einrichtung zum Erzeugen von elektrischer Energie, beispielsweise einer Brennstoffzelle, zugeführt wird.

3. Verfahren nach Anspruch 2, **dadurch gekennzeichnet, dass** der gewonnene Wasserstoff mit bis 70 Vol. % Stickstoff verdünnt wird.

4. Verfahren nach einem der Ansprüche 2 oder 3, **dadurch gekennzeichnet, dass** ein Teil der von der Gasturbine erzeugten mechanischen Energie zum Antrieb des Verdichters der Luftzerlegungsanlage genutzt wird.

5. Verfahren nach einem der Anspräche 2 oder 3, **dadurch gekennzeichnet, dass** ein Teil der von der Gasturbine erzeugten mechanischen Energie zum Antrieb des Kompressors für das CO₂ genutzt wird.

## Claims

1. A process for obtaining CO₂ from desulfurized natural gas or petroleum gas liberated from C₂₊ components, which preheated to a temperature of 45 to 75 °C is autothermally reformed in a first reaction stage by adding gas containing at least 75 vol-% of O₂ [calculated dry] at a temperature of 900 to 1200 °C and a pressure of 40 to 100 bar_{abs} by partial oxidation over a fixed bed of a cracking catalyst to obtain a raw synthesis gas, containing as main components [calculcated dry] 55 to 75 vol-% of H₂, 15 to 30 vol-% of CO and 5 to 30 vol-% of CO₂ [calculated dry] with a volume ratio of H₂ CO of 1.6 to 4, in a second reaction stage the CO contained in the raw synthesis gas having a temperature of 75 to 110 °C and a pressure of 75 to 50 bar_{abs} is converted to H₂ and CO₂ over a fixed-bed catalyst, from the synthesis gas containing at least 55 vol-% of H₂ [calculated dry] CO₂ is washed out at a pressure of 15 to 100 bar_{abs} in a first washing stage with methanol having a temperature of +10 to -80 °C, and absorbed CO₂ is recovered by expanding the cold methanol to almost atmospheric pressure,
wherein the recovered CO₂ is transferred into the supercritical condition and the CO₂ transferred into the supercritical condition is used for solvent flooding of partly deoiled petroleum deposits, for incorporation into pore storage facilities, storage caverns, depleted natural gas reservoirs or saline aquifers or for the oxosynthesis, and wherein the impurities comprising CO, CH₄ and Ar, which are left after the CO₂ absorption, are absorbed in a second washing stage by means of the liquid nitrogen produced in an air separation unit, and after expansion are recirculated directly into the first reaction stage as fuel gas.

2. The process according to claim 1, **characterized in that** the hydrogen obtained is recirculated as fuel to a gas turbine and/or another means for generating electric energy, for example to a fuel cell.

3. The process according to claim 2, **characterized in that** the hydrogen obtained is diluted with up to 70 vol-% of nitrogen.

4. The process according to any of claims 2 or 3, **characterized in that** a part of the mechanical energy generated by the gas turbine is utilized for driving the compressor of the air separation unit.

5. The process according to any of claims 2 or 3, **characterized in that** a part of the mechanical energy generated by the gas turbine is utilized for driving the compressor for the CO₂.

## Revendications

1. Procédé d'obtention de CO₂ à partir de gaz naturel ou de gaz associé au pétrole désulfuré et débarrassé de constituants en C₂₊-, qui est réformé de manière autotherme, en étant préchauffé jusqu'à une température de 45 à 75 °C, dans un premier stade de réaction, avec addition d'au moins 75 % en volume d'un gaz contenant du O₂ [exprimé en matière sèche] à une température de 900 et 1200°C et sous une pression de 40 à 100 bar_{abs}, par oxydation partielle sur un lit fixe en un catalyseur de craquage, en un gaz de synthèse brut contenant comme constituants principaux [exprimé en matière sèche] de 55 à 75 % en volume d'H₂, de 15 à 30 % en volume de CO et de 5 à 30 % en volume de CO₂ [exprimé en matière sèche] avec un rapport en volume de H2 : CO de 1,6 à 4, dans un deuxième stade de réaction le CO contenu dans le gaz de synthèse brut ayant une température de 75 à 110 °C et une pression de 75 à 50 bar_{abs} est transformé sur au moins un catalyseur en lit fixe en H₂ et CO₂, du gaz de synthèse contenant au moins 55 % en volume d'H₂ [exprimé en matière sèche] est extrait par lavage, dans un premier stade de lavage, du méthanol ayant du CO₂ sous une pression de 15 à 100 bar_{abs} et une température de + 10 à - 80 °C et du CO₂ absorbé est récupéré par détente du méthanol froid jusqu'à peu près la pression atmosphérique,
dans lequel on fait passer le CO₂ récupéré à l'état supercritique et le CO₂ qui est passé à l'état supercritique est utilisé pour l'injection de solvant dans des gisements de pétrole, en partie exploités, pour la mise dans des stockages de pores, dans des stockages de caverne, dans des gisements de gaz naturel épuisés ou dans des zones aquifères salines ou pour la synthèse oxo et dans lequel on absorbe, dans un deuxième stade de lavage, au moyen de l'azote liquide produit dans une installation de fractionnement de l'air, les impuretés qui restent après l'absorption du CO₂ et qui comprennent du CO, du CH₄ et de l'Ar et, après détente, on les renvoie directement comme gaz de chauffage au premier stade de réaction.

2. Procédé suivant la revendication 1,
**caractérisé en ce que** l'on envoie l'hydrogène obtenu comme combustible d'une turbine à gaz et/ou d'un autre dispositif de production d'énergie électrique, par exemple d'une pile à combustible.

3. Procédé suivant la revendication 2,
**caractérisé en ce que** l'on dilue l'hydrogène obtenu par jusqu'à 70 % en volume d'azote.

4. Procédé suivant l'une des revendications 1 ou 2, **caractérisé en ce qu'**on utilise une partie de l'énergie mécanique produite par la turbine à gaz pour entraîner le compresseur de l'installation de fractionnement d'air.

5. Procédé suivant l'une des revendications 2 ou 3, **caractérisé en ce que** l'on utilise une partie de l'énergie mécanique produite par la turbine à gaz pour l'entraînement du compresseur du CO₂.
